Europäisches Patentamt

European Patent Office

Office européen des brevets

(19)

(11) Veröffentlichungsnummer: **0 371 160**
**A1**

## (12) EUROPÄISCHE PATENTANMELDUNG

(21) Anmeldenummer: 88119878.2

(22) Anmeldetag: 29.11.88

(51) Int. Cl.⁵: **A01N 63/02, //(A01N63/02, 47:18)**

(43) Veröffentlichungstag der Anmeldung:
06.06.90 Patentblatt 90/23

(84) Benannte Vertragsstaaten:
**DE ES FR GB IT NL**

(71) Anmelder: **VEB Berlin-Chemle**
**Glienicker Weg 125-127**
**DDR-1199 Berlin(DD)**

(72) Erfinder: **Thrum, Heinz, Dr.sc.nat.**
**Hermann-Löns-Str. 62**
**DDR - 6900 - Jena(DD)**
Erfinder: **Bocker, Harald, Dr.rer.nat.**
**Steingraben 15**
**DDR-6900 - Jena(DD)**
Erfinder: **Fricke, Heinz, Dr.rer.nat.**
**Emil-Höllein-Str. 88**
**DDR-6900 Jena(DD)**
Erfinder: **Jahn, Marga, Dr.rer.nat.**
**Grasweg 21**
**DDR-1532 Kleinmachnow(DD)**
Erfinder: **Stachewicz, Hans, Dr.rer.agr.**
**Leninallee 1**

**DDR-1532 Kleinmachnow(DD)**
Erfinder: **Burth, Ulrich, Dr.sc.agr.**
**Im Kamp 72**
**DDR-1532 Kleinmachnow(DD)**
Erfinder: **Adam, Lothar, Dr.rer.agr.**
**Im Hagen 36**
**DDR- 1532 Kleinmachnow(DD)**
Erfinder: **Albrecht, Ursula**
**Wilhelmshorst**
**DDR-1513 Wilhelmshorst(DD)**
Erfinder: **Sörensen, Anneliese**
**Kaulsdorfer Str. 266**
**DDR-1170 Berlin(DD)**
Erfinder: **Rattba, Hubert, Dr.rer.agr.**
**Elbestr. 15 d**
**DDR-1530 Teltow(DD)**

(74) Vertreter: **Patentanwälte Beetz sen. - Beetz**
**jun. Timpe - Siegfried - Schmitt-Fumian-**
**Mayr**
**Steinsdorfstrasse 10**
**D-8000 München 22(DE)**

(54) **Wirkstoffkombination und Mittel gegen Lagerfäulen der Kartoffel.**

(57) Die Erfindung betrifft eine Wirkstoffkombination gegen Lagerfäulen der Kartoffel auf der Basis einer antibakteriellen und einer fungiziden Komponente. Die antibakterielle Komponente ist das Streptothricin-Antibiotikum Nourseothricin, insbesondere in Form seiner Salze und/oder Adsorbate; als fungizide Komponente enthält die Wirkstoffkombination Methyl-2-benzimidazolcarbamat und/oder Substanzen mit vergleichbarer Wirkung. Die hierbei verwendeten antimikrobiellen Substanzen werden nicht in der Human-bzw. Veterinärtherapie eingesetzt.

Xerox Copy Centre

## Wirkstoffkombination und Mittel gegen Lagerfäulen der Kartoffel

Die Erfindung betrifft eine Wirkstoffkombination gegen Lagerfäulen von Kartoffeln, insbesondere bei der Überwinterung. Sie erweitert die Palette der Pflanzenbeizmittel und ist daher von Nutzen für die Landwirtschaft und Nahrungsgüterwirtschaft sowie die Pflanzenschutzmittel herstellende Industrie.

Es sind bereits Wirkstoffkombinationen bekannt, die als Pflanzenbeizmittel eingesetzt werden, um Lagerverluste bei der Überwinterung von Kartoffeln, insbesondere Pflanzkartoffeln, zu mindern. Bei solchen Pflanzenbeizmitteln handelt es sich um Wirkstoffkombinationen aus einer antibakteriellen Komponente, wie z.B. Bronopol oder dem Antibiotikum Chloramphenicol, und einer fungizid wirkenden Komponente, beispielsweise Methyl-2-benzimidazolcarbamat und/oder in dessen Wirkung vergleichbaren Substanzen. Gefordert wird von solchen Pflanzenbeizmitteln, daß sie gut pflanzenverträglich sind, keine abträglichen Auswirkungen auf den Nachbau haben und die Umwelt möglichst nicht belasten (Übersichten in: Burth, U., Pflaumbaum, J., und Brazda, G., Pflanzengesunderhaltung durch Beizung, Nachrichtenblatt für den Pflanzenschutz in der DDR 32 (1978) 6, 105 - 110; Brazda, G., und Pett, B., Stand und Entwicklung der chemischen Bekämpfung von Lagerfäulen und Auflaufkrankheiten der Kartoffel, Fortschrittsberichte für die Landwirtschaft und Nahrungsgüterwirtschaft 1980 (2) 40, sowie Schumann, P., Brazda, G., und Gall, H., Fragen der Kartoffelbeizung, Feldwirtschaft 24 (1983) 3, 123 -124). Die Verwendung von therapeutisch genutzten Antibiotika, wie Chloramphenicol, im Pflanzenschutz ist wegen der Gefahr der Resistentenentwicklung und -übertragung innerhalb der Bakterienflora im Menschen und in landwirtschaftlichen Nutztieren aus epidemiologischen Gründen nur noch ausnahmsweise gestattet.

Es ist daher notwendig, für die Pflanzgutbeizung andere Wirkstoffe, einschließlich Antibiotika, bereitzustellen. Bisher sind Wirkstoffkombinationen, die hinsichtlich ihrer antimikrobiellen Aktivität, Pflanzenverträglichkeit und positiven Beeinflussung des Nachbaus den Chloramphenicol/Methyl-2-benzimidazolcarbamat-Kombinationen entsprechen, nicht bekannt. Das für diesen Anwendungsbereich entwickelte Bronopol (2-Brom-2-nitropropan-1,3-diol) erreicht insbesondere hinsichtlich der Wirkung gegen Lagerfäulen nicht die Wirkung von Chloramphenicol.

Die Erfindung bezweckt die Minderung von Lagerfäulen der Kartoffeln, insbesondere Pflanzkartoffeln, ohne nachteilige Auswirkungen auf den Nachbau.

Der Erfindung liegt die Aufgabe zugrunde, eine Wirkstoffkombination und entsprechende Mittel anzugeben, die auf grund ihrer antibakteriellen und fungiziden Eigenschaften die Lagerfäulen von Kartoffeln und insbesondere von Pflanzkartoffeln während der Überwinterungsphase wesentlich einschränken, den Nachbau nicht beeinträchtigen, die Umwelt nicht belasten und keine Komponenten enthalten, die auf medizinischen Gebieten in der Human- und Veterinärmedizin eingesetzt werden.

Überraschend wurde gefunden, daß durch die Verwendung des Streptothricin-Antibiotikums Nourseothricin als antibakteriellen Wirkstoff in solchen antibakteriell-fungizid wirkenden Pflanzenbeizmitteln anstelle von Chloramphenicol die Lagerfäulen der Kartoffel und insbesondere von Pflanzkartoffeln während der Überwinterungsphase wesentlich gemindert und der Nachbau positiv beeinflußt werden können, ohne die Umwelt zu belasten und medizinische Risiken hervorzurufen.

Die Aufgabe wird anspruchsgemäß gelöst. Die abhängigen Ansprüche betreffen vorteilhafte Ausführungsformen der Erfindung.

Die erfindungsgemäße Wirkstoffkombination gegen Lagerfäulen der Kartoffel umfaßt eine antibakterielle und eine fungizide Komponente, die jeweils aus einem oder mehreren antibakteriellen bzw. fungiziden Wirkstoffen bestehen können; sie sind dadurch gekennzeichnet, daß die antibakterielle Komponente aus Nourseothricin besteht oder diesen Wirkstoff enthält.

Vorteilhafterweise besteht die antibakterielle Komponente aus Nourseothricin.

Die fungizide Komponente besteht vorteilhaft teilweise oder ganz aus einem Benzimidazolfungizid, insbesondere Methyl-2-benzimidazolcarbamat, und/oder anderen, in der fungiziden Wirkung vergleichbaren Wirkstoffen.

Das antibakteriell wirkende Streptothricinantibiotikum Nourseothricin wird günstigerweise in Form seiner Salze, besonders des Sulfats, und/oder Adsorbate an geeigneten Adsorbentien, beispielsweise Bentonit, in Kombination eingesetzt. Das massenbezogene Mischungsverhältnis Nourseothricin-Wirkstoff: Fungizid liegt im Bereich von 1:3 bis 1:100 und beträgt bei Verwendung der fungiziden Substanz Methyl-2-benzimidazolcarbamat vorzugsweise 1:10 bis 1:35. Die erfindungsgemäße Wirkstoffkombination kann unter Beachtung der Phytotoxizität bei Kartoffelknollen mit den üblichen Formulierungshilfsstoffen versetzt werden.

Die erfindungsgemäße Wirkstoffkombination beseitigt durch die Verwendung von Nourseothricin die mit dem gleichzeitigen Einsatz eines Antibiotikums auf medizinischen und nichtmedizinischen Gebieten verbundenen Mängel und Risiken.

Wirkstoffkombinationen, die Nourseothricin anstelle von Chloramphenicol als antibakterielle Komponente enthalten, besitzen eine stärkere Hemmwirkung gegen Erreger von Lagerfäulen der Kartoffel und zeigen außerdem eine günstigere Beeinflussung des Nachbaus. In dieser Hinsicht ist demnach Nourseothricin dem Chloramphenicol überlegen.

Nourseothricin ist ein von lebenden Organismen gebildeter und ausgeschiedener Wirkstoff, der sich bei oraler Applikation durch eine nur geringe Toxizität gegenüber Säugetieren und Menschen auszeichnet.

Ein weiterer Vorteil ist, daß das mit der Wirkstoffkombination bzw. Beizmitteln ausgebrachte Nourseothricin im Erdboden und in Gewässern innerhalb eines Tages weitgehend inaktiviert wird und somit die Umwelt nicht belastet.

Die folgenden Beispiele belegen die Eignung des Nourseothricins als antibakterielle Komponente in der Wirkstoffkombination gegen Lagerfäulen der Kartoffel und dessen positive Auswirkungen auf den Nachbau.


## Beispiel 1 und Vergleichsbeispiel 1

Geerntete Kartoffeln (Sorte Adretta) wurden nach Säuberung von anhaftenden Bodenpartikeln zur Beizung mit einer wäßrigen Präparate-Suspension besprüht, wobei pro t Kartoffeln 3 Liter dieser Lösung aufgewendet wurden. Gemäß Beispiel 1 wurden auf die Kartoffeln 5 g Nourseothricinsulfat und 120 g Methyl-2-benzimidazolcarbamat je t Pflanzgut und gemäß Vergleichsbeispiel 1 2,5 g Chloramphenicol und 120 g Methyl-2-benzimidazolcarbamat je t Pflanzgut aufgebracht, wobei in beiden Fällen je 10 t Kartoffeln eingesetzt wurden.

Nach dem Eintrocknen der aufgesprühten Beizmittelbrühe wurden die Kartoffeln unter den für solches Pflanzgut üblichen Bedingungen bis zum nachfolgenden Frühjahr gelagert.

Die durch die Pflanzgutbeizung erzielte Verringerung des Ausmaßes der Lagerfäule belegen die in Tabelle 1 aufgeführten gemittelten Werte der Ergebnisse aus vier solchen Großversuchen, in der auch entsprechende Werte aus Kontrollversuchen mit unbehandelten Kartoffeln angegeben sind.

Tabelle 1

| Vergleich von Nourseothricin-Sulfat bzw. Chloramphenicol in Kombination mit Methyl-2-benzimidazolcarbamat gegen Lagerfäulen bei Pflanzkartoffeln | | |
|---|---|---|
| | Fäulemasse (%) | Wirkungsgrad (%) |
| Kontrollversuche | 5,11 | - |
| Vergleichsbeispiel 1 | 1,57 | 69 |
| Beispiel 1 | 1,27 | 75 |


## Beispiel 2 und Vergleichsbeispiel 2

In zwei Parzellenversuchen mit Kartoffeln der Sorten Adretta und Sola, deren Pflanzgut wie in Beispiel 1 behandelt und gelagert worden war, wurden die Wirkung auf den Befall mit Schwarzbeinigkeit und der Einfluß auf die Ertragsbildung des Nachbaus verglichen.

In Beispiel 2 wurde das Beizmittel von Beispiel 1 und in Vergleichsbeispiel 2 das Beizmittel von Vergleichsbeispiel 1 eingesetzt.

Die hierbei durch die Verwendung von Nourseothricin erreichten günstigen Wirkungen zeigen die Werte der in Tabelle 2 dargestellten Ergebnisse, in der auch entsprechende Werte aus Kontrollversuchen mit unbehandelten Kartoffeln angegeben sind.

Tabelle 2

| Vergleich des Einflusses der Beizung von Kartoffelpflanzgut auf den Befall mit Schwarzbeinigkeit und auf die Ertragsbildung (Nachbau-Parzellenversuche; $\bar{x}$ der Sorten Adretta, Sola) | | | | | | |
|---|---|---|---|---|---|---|
| | Schwarzbeinigkeit | | Pflanzgutertrag | | Gesamterertrag | |
| | Befall (%) | Wirkungsgrad (%) | (dt/ha) | (%) | (dt/ha) | (%) |
| Kontrollversuche | 4,11 | - | 318,2 | 100 | 390,3 | 100 |
| Vergleichsbeispiel 2 | 2,51 | 39 | 314,6 | 106 | 379,0 | 97 |
| Beispiel 2 | 0,94 | 77 | 351,5 | 110 | 413,4 | 106 |

## Beispiele 3 bis 5 und Vergleichsbeispiel 3

In ähnlicher Weise wie in Beispiel 1 wurden Kartoffeln der Sorte Sola mit Kombinationen aus Nourseothricinsulfat und Methyl-2-benzimidazolcarbamat in unterschiedlichen Mischungsverhältnissen behandelt und gelagert. Ein Nachbau der behandelten Kartoffeln erfolgte im nächsten Jahr in zwei Parzellenversuchen.

Die erhaltenen Ergebnisse sind in Tabelle 3 zusammengefaßt, in der auch entsprechende Werte aus Kontrollversuchen mit unbehandelten Kartoffeln angegeben sind.

In den Beispielen 3 bis 5 bzw. Vergleichsbeispiel 3 wurden folgende Wirkstoffkombinationen eingesetzt:

## Beispiel 3:

3,7 g Nourseothricin-Base + 120 g Methyl-2-benzimidazolcarbamat/t Kartoffeln

## Beispiel 4:

3,7 g Nourseothricin-Base + 80 g Methyl-2-benzimidazolcarbamat/t Kartoffeln

## Beispiel 5:

3,7 g Nourseothricin-Base + 37,6 g Methyl-2-benzimidazolcarbamat/t Kartoffeln

## Vergleichsbeispiel 3:

2,5 g Chloramphenicol + 120 g Methyl-2-benzimidazolcarbat/t Kartoffeln.

Die in Tabelle 3 aufgeführten Ergebnisse beweisen die vorteilhaften Wirkungen von Nourseothricin auf das Auftreten von Lagerfäulen sowie die Ertragsbildung.

## Tabelle 3

Vergleich des Einflusses der Beizung von Kartoffelpflanzgut mit Kombinationen aus Nourseothricinsulfat und Methyl-2-benzimidazolcarbamat in unterschiedlichen Mischungsverhältnissen auf das Auftreten von Lagerfäulen und die Ertragsbildung (Erträge: $\bar{x}$ von zwei Parzellenversuchen)

| | Fäule-masse (%) | Wirkungs-grad (%) | Trieb-zahl/ Staude | Pflanz-gutertrag (dt/ha) | (%) | Gesamt-ertrag (dt/ha) | (%) |
|---|---|---|---|---|---|---|---|
| Kontroll-versuche | 1,2 | – | 7,09 | 364,3 | 100,0 | 484,2 | 100,0 |
| Vergleichs-beispiel 3 | 0,7 | 41,7 | 7,14 | 401,9 | 110,3 | 499,6 | 103,2 |
| Beispiel 3 | 0,3 | 75,0 | 8,24 | 390,6 | 107,2 | 519,1 | 107,2 |
| Beispiel 4 | 0,6 | 50,0 | 7,81 | 383,0 | 105,1 | 502,4 | 103,8 |
| Beispiel 5 | 0,7 | 41,7 | 7,87 | 399,5 | 109,7 | 498,0 | 102,9 |

**Beispiel 6**

**Formulierungsbeispiel einer erfindungsgemäßen Wirkstoffkombination:**

Als antibakterielle Komponente wird Nourseothricinsulfat mit einem Wirkstoffgehalt von 70 % verwendet, das, bezogen auf den Gehalt an Nourseothricin-Wirkstoff, im Verhältnis 1:34 mit dem Fungizid Methyl-2-benzimidazolcarbamat gemischt und in Wasser dispergiert wird. Zur Beizung von 1 t Kartoffelpflanzgut werden 5 g Nourseothricinsulfat mit einem Wirkstoffgehalt von 70 % eingesetzt.

**Beispiel 7**

**Formulierungsbeispiel einer erfindungsgemäßen Wirkstoffkombination:**

Als antibakterielle Komponente wird staubfein gemahlenes mycelhaltiges Nourseothricin-Bentonit-Adsorbat mit einem Wirkstoffgehalt von 1,0 % verwendet, das wie in Beispiel 6 mit Methyl-2-benzimidazolcarbamat gemischt und in Wasser dispergiert wird. Zur Beizung von 1 t Kartoffelpflanzgut werden 87,5 g dieses mycelhaltigen Nourseothricin-Bentonit-Adsorbats eingesetzt.

**Ansprüche**

1. Wirkstoffkombination gegen Lagerfäulen der Kartoffel aus einer antibakteriellen und einer fungiziden Komponente,
**dadurch gekennzeichnet,**
daß die antibakterielle Komponente aus dem Streptothricin-Antibiotikum Nourseothricin besteht oder diesen Wirkstoff enthält.

2. Wirkstoffkombination nach Anspruch 1, dadurch gekennzeichnet, daß das Nourseothricin in Form eines Salzes und/oder eines Adsorbats an einem pflanzenphysiologisch verträglichen Adsorbens vorliegt.

3. Wirkstoffkombination nach Anspruch 1 oder 2, dadurch gekennzeichnet, daß das Massenverhältnis Nourseothricin/fungizide Komponente, bezogen auf die Wirkstoffe, 1:3 bis 1:100 beträgt.

4. Wirkstoffkombination nach einem der Ansprüche 1 bis 3, dadurch gekennzeichnet, daß die fungizide Komponente teilweise oder ganz aus einem Benzimidazol und/oder in der fungiziden Wirksamkeit vergleichbaren Wirkstoffen besteht.

5. Wirkstoffkombination nach einem der Ansprüche 1 bis 4, dadurch gekennzeichnet, daß die fungizide Komponente teilweise oder ganz aus Methyl-2-benzimidazolcarbamat besteht.

6. Wirkstoffkombination nach Anspruch 5, dadurch gekennzeichnet, daß das Massenverhältnis Nourseothricin/fungizide Komponente, bezogen auf die Wirkstoffe, 1:10 bis 1:35 beträgt.

7. Wirkstoffkombination nach einem der Ansprüche 1 bis 6, gekennzeichnet durch Nourseothricin als antibakterielle Komponente und Methyl-2-benzimidazolcarbamat als fungizide Komponente.

8. Beizmittel gegen Lagerfäule der Kartoffel, gekennzeichnet durch eine Wirkstoffkombination nach einem der Ansprüche 1 bis 7 und pflanzenphysiologisch geeignete Formulierungshilfsstoffe und/oder Trägerstoffe.

9. Verfahren zur Behandlung von Kartoffeln gegen Lagerfäulen durch Aufbringen einer Wirkstoffkombination aus einer antibakteriellen und einer fungiziden Komponente, gekennzeichnet durch Verwendung einer Wirkstoffkombination nach einem der Ansprüche 1 bis 7 oder eines Beizmittels nach Anspruch 8.

**Europäisches Patentamt**

# EUROPÄISCHER RECHERCHENBERICHT

Nummer der Anmeldung

EP 88 11 9878

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DD-A- 257 192 (AKADEMIE DER WISSENSCHAFTEN DER DDR) * Insgesamt * ----- | 1-9 | A 01 N 63/02 // (A 01 N 63/02 A 01 N 47:18 ) |
| | | | **RECHERCHIERTE SACHGEBIETE (Int. Cl.5)** |
| | | | A 01 N |

Der vorliegende Recherchenbericht wurde für alle Patentansprüche erstellt

| Recherchenort | Abschlußdatum der Recherche | Prüfer |
|---|---|---|
| DEN HAAG | 31-07-1989 | RAVANEL C.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

EPO FORM 1503 03.82 (P0403)